Europäisches Patentamt

European Patent Office

Office européen des brevets

(11) Publication number: **0 270 040**

**A2**

(12) **EUROPEAN PATENT APPLICATION**

(21) Application number: **87117622.8**

(22) Date of filing: **27.11.87**

(51) Int. Cl.4: **C01B 3/02**

(30) Priority: **02.12.86 US 937151**

(43) Date of publication of application:
**08.06.88 Bulletin 88/23**

(84) Designated Contracting States:
**DE FR GB IT NL**

(71) Applicant: **NORTON COMPANY**
**1 New Bond Street**
**Worcester Massachusetts 01606(US)**

(72) Inventor: **Shah, Vinod A.**
**1429 Woodlake Boulevard**
**Stow Ohio(US)**

(74) Representative: **Baillie, Iain Cameron et al**
**c/o Ladas & Parry Isartorplatz 5**
**D-8000 München 2(DE)**

(54) **Process for removing carbon dioxide from a gas.**

(57) Enhanced recovery of carbon dioxide from a solvent used in the purification of a gas stream in an absorption tower is achieved by employing a pressure of less than 5 psi (0.35 Bar) in a flash drum to remove > 96% of carbon dioxide; regeneration of the solvent for recycling is varied, depending upon the total system requirements.

Fig. 1

EP 0 270 040 A2

This invention relates to improvements in processes to recover $CO_2$ from gases, particularly from ammonia synthesis gas.

Present processes for treating ammonia synthesis gas by physical separation with solvents are capable of recovering only 55 to 90% of the feed carbon dioxide. In a conventional "Selexol" treating unit, the synthesis gas is contacted with cold Selexol solvent in the $CO_2$ absorber operating at, typically, 400 psia (27 Bars). The $CO_2$ is absorbed by "Selexol" flowing down the absorber. The $CO_2$ rich solvent from the bottom of the absorber is then flashed to a flash drum operating at lower pressures (70-140 psia or 4.8 to 9.7 Bars). This results in flashing and rejecting most of the co-absorbed $H_2$, $CH_4$ and inert gases from the rich "Selexol" solvent. The flashed gas is removed, compressed and recycled to absorber or routed to other services. The "Selexol" liquid, essentially containing $CO_2$ is then flashed to nearly atmospheric pressures in a second flash drum. The flashed $CO_2$, approximately 55 to 70% of the feed ($CO_2$) is then separated and removed from the low pressure flash drum (operating at 14-25 psia or 1 to 22 Bars) and transferred to a $CO_2$ product line.

If the amount of carbon dioxide recovered is adequate for downstream needs, then the solvent is regenerated in a stripping column. Air is generally used as a stripping medium in a countercurrent packed tower. The spent air, containing stripped $CO_2$ is then vented to the atmosphere from the top of the column. The regenerated solvent is then recycled to the absorber. The $CO_2$ which is vented with air is a loss to the process.

If higher than 55 to 70% $CO_2$ recovery is desired, the solvent from the atmospheric flash drum is routed to a vacuum flash drum before regenerating the solvent in the air-stripper column. The vacuum pressure flash drum generally operates between 12 psia to 5 psia (0.8 to 0.3 Bars). The addition of this vacuum drum results into an increase in $CO_2$ recovery as high as 90%. The operating pressure of this drum depends on the recovery of $CO_2$ desired. The lower the operating pressure of the drum, the higher the recovery of $CO_2$.

An object of the present invention is to permit substantially complete, approaching 100%, $CO_2$ recovery. The methods discussed below are applicable for treating with all physical solvents, and all mixtures of chemical and physical solvents. However, for illustration, Selexol TM solvent (a physical solvent, which is the dimethyl ether of polyethylene glycol) is used in this discussion. Furthermore, besides treating ammonia synthesis gas, the patentable process schemes discussed below may also be used in the treating of hydrogen synthesis gas, any coal and oil derived synthesis gas as well as natural gas treating.

In accordance with the present invention there is provided a process for removing carbon dioxide from a gas in an absorption tower by means of a liquid solvent, wherein the resulting liquid is regenerated by means of a stripping gas for recycle to the absorption tower, wherein prior to final regeneration by means of the stripping gas, the solvent is subjected to reduced pressure at less than 5 psia (0.35 Bar) to provide a solvent stream to the regeneration step having more than 95% of its sorbed carbon dioxide removed.

BRIEF DESCRIPTION OF THE DRAWINGS

In the drawings,

Figure 1 is a schematic flow diagram of a system for recovering 90 to 98% of the carbon dioxide.

Figure 2 is a schematic flow diagram of a process also for recovering 90 to 98% of the carbon dioxide.

Figure 3 is a flow diagram of a method for recovery of substantially 100% of the carbon dioxide.

Figure 4 also shows a process for a substantial 100% recovery with spent air from the stripper being recycled in the process.

Figure 5 shows a schematic of a substantially 100% recovery process using treated synthesis gas as the stripping gas.

DESCRIPTION OF THE INVENTION

The processes of the present invention increase the carbon dioxide recovery greatly over prior art processes, and, depending on the particular process, can provide substantial capital savings and lower power requirements.

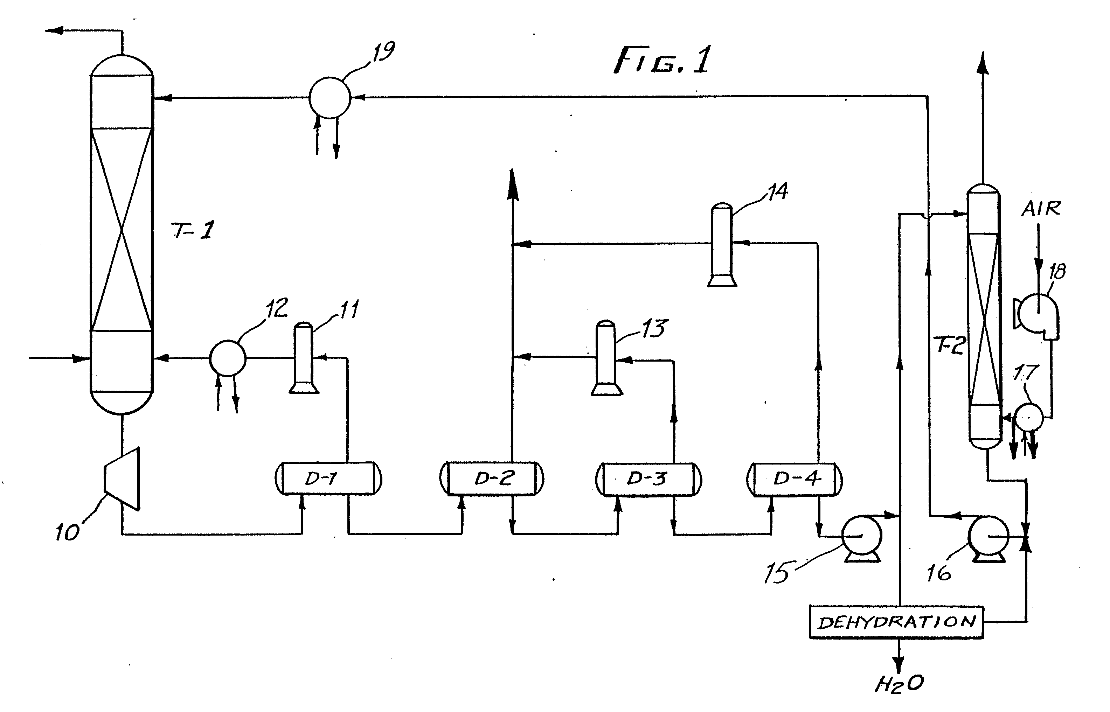

In the process of Figure 1, gas to be treated enters tower T-1 at the bottom and exits at the top as shown by the arrows. Regenerated liquid solvent is pumped into the top and exits at high pressure through turbine 10 (for power recovery) to flash drum D-1 operating at a lower pressure as in the conventional operation described above. The flashed gas is re-compressed by compressor 11 and recycles to the bottom of absorber T-1 through optional cooler 12, as shown. Flash drums D-2 and D-3 operate, as described above, for higher than 55 to 70% recovery. As distinguished from the conventional procedure, an additional flash drum, D-4, operating at 1 to 2 psia (0.1 to 0.2 Bar), is inserted downstream of drum D-3 and its associated compressor 13. Compressor 14 raises the pressure of the gas which is mixed with the carbon dioxide from the other drums for whatever use desired.

The sorbent exiting from drum D-4 passes through pump 15 to the top of stripping tower T-2. Air is forced into the tower by blower 18 through cooler 17, and pump 16 delivers the regenerated solvent to the top of tower T-1, through optional cooler/chiller 19.

The use of drum D-4 operating at unconventionally low pressure, permits substantially higher recovery of $CO_2$ from the solvent, as compared to the prior art arrangement.

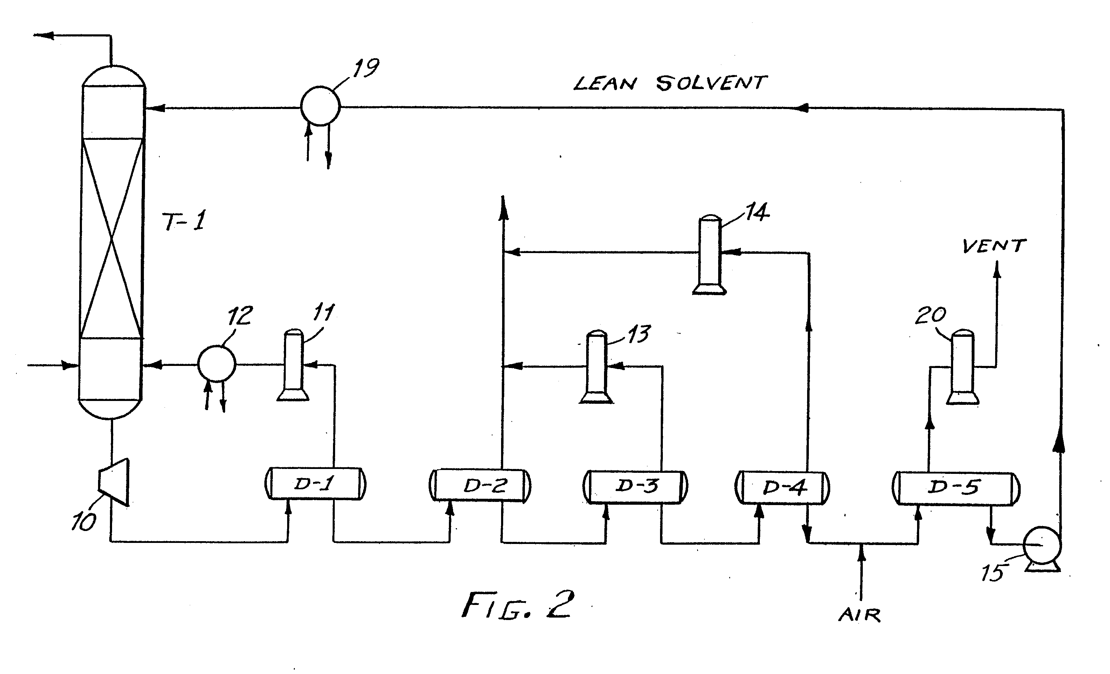

In Figure 2 is shown a modified scheme where a flash drum D-5 and cocurrent injection of air into the solvent stream is substituted for the conventional stripping column of Figure 1.

The turbine 10, heat exchanger 19 and compressors 11, 13 and 14, and pump 15, all function as the corresponding elements of Figure 1. A dehydrator, not shown, may also be present as in Figure 1.

The method of Figure 2 achieves 97 to 98% recovery of carbon dioxide, and provides substantial capital savings in the elimination of the stripper column. While requiring a higher volume of air than is required by the conventional packed stripping tower, the high cost of the large tower is eliminated.

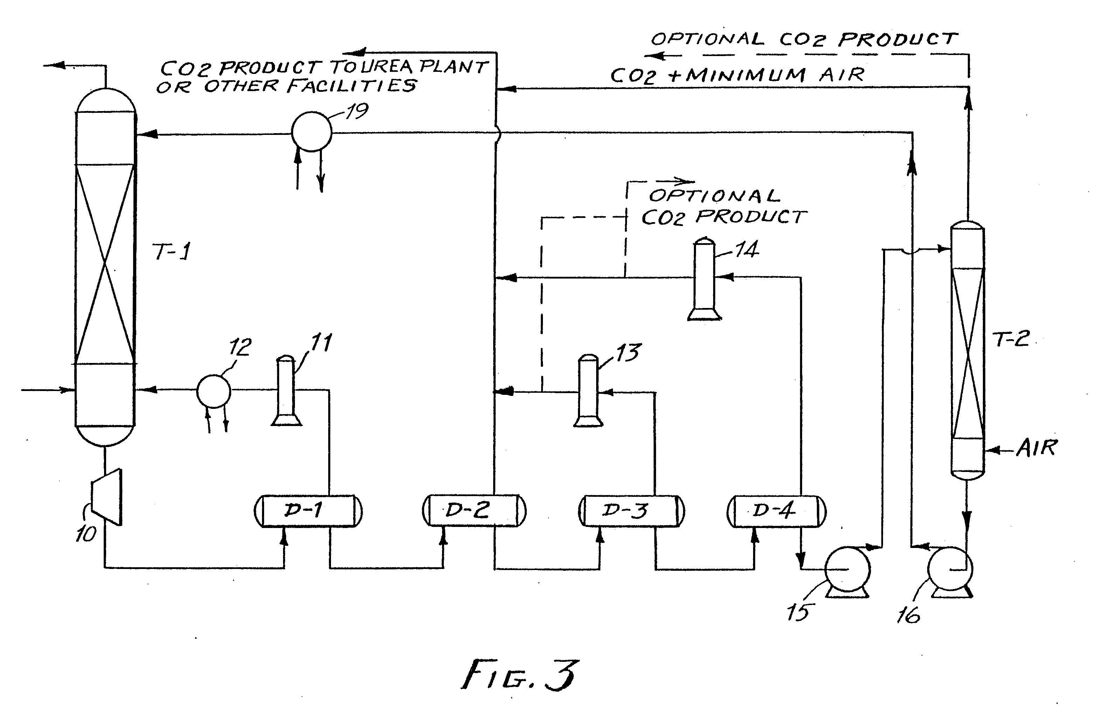

In Figure 3 the process is essentially the same as Figure 1, except for the stripping column operation. In this case the stripping column operates at subatmospheric pressure of 1 to 5 pounds per square inch (0.1 to 0.3 Bar). By conducting the stripping at low pressure, the quantity of air required to regenerate the solvent is very small. As a result, the spent air can be mixed with the carbon dioxide product without adding a significant dilution by oxygen and nitrogen.

In the method of Figure 3, substantially 100% of the carbon dioxide is recovered and lower utility cost (power) is achieved, and the carbon dioxide can be utilized to produce urea by reaction with ammonia.

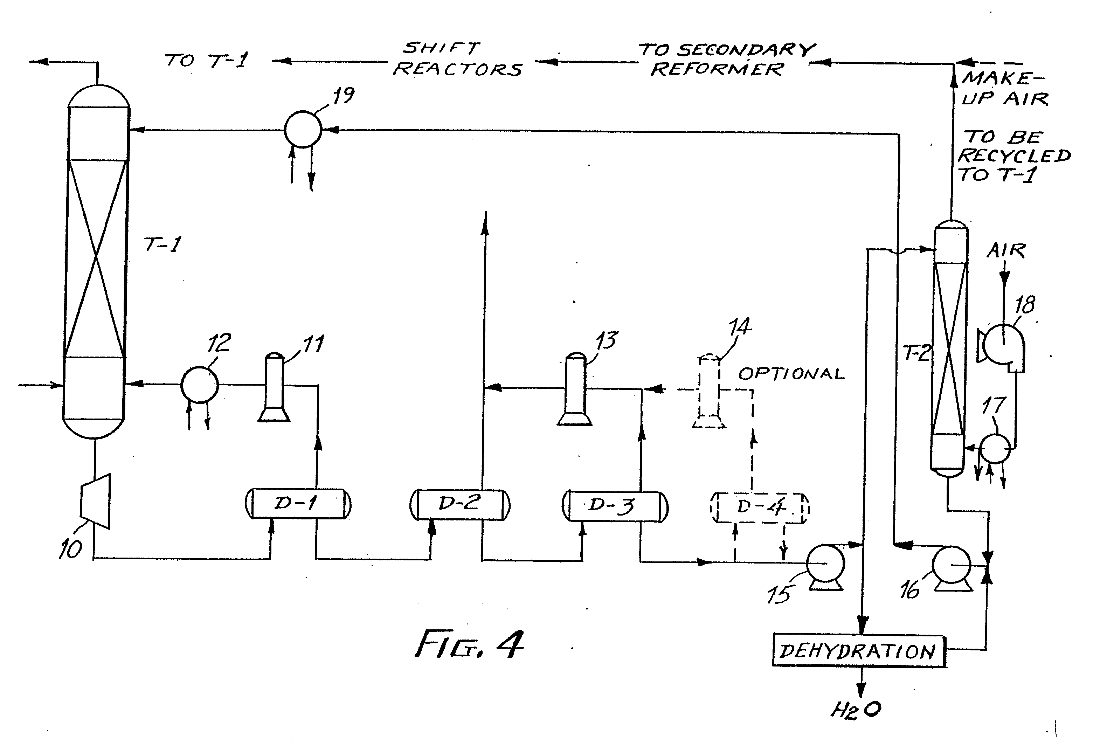

The method of Figure 4 is the same as that in Figure 1, except that in this case the air and carbon dioxide from absorber T-2 is not vented but is compressed and mixed with sufficient air to provide the stoichiometric requirements at the secondary reformer, when the ammonia plant process is hydrocarbon - steam reforming. Thus, the recycled carbon dioxide from T-2 is ultimately returned to absorber T-1 mixed with synthesis gas feed. Since the spent air is recycled there are no carbon dioxide losses, essentially all of the carbon dioxide being recovered. This Figure 4 scheme is similar to that disclosed in U.K. Patent 2 051 757. But, by combining the recycle with a very low pressure in D-3 or D-4, as compared to the 0.7 Bar (10 psi) pressure in the British patent, lower operating costs are achieved since less gas volume need be compressed, and the power requirement for compression is thus reduced.

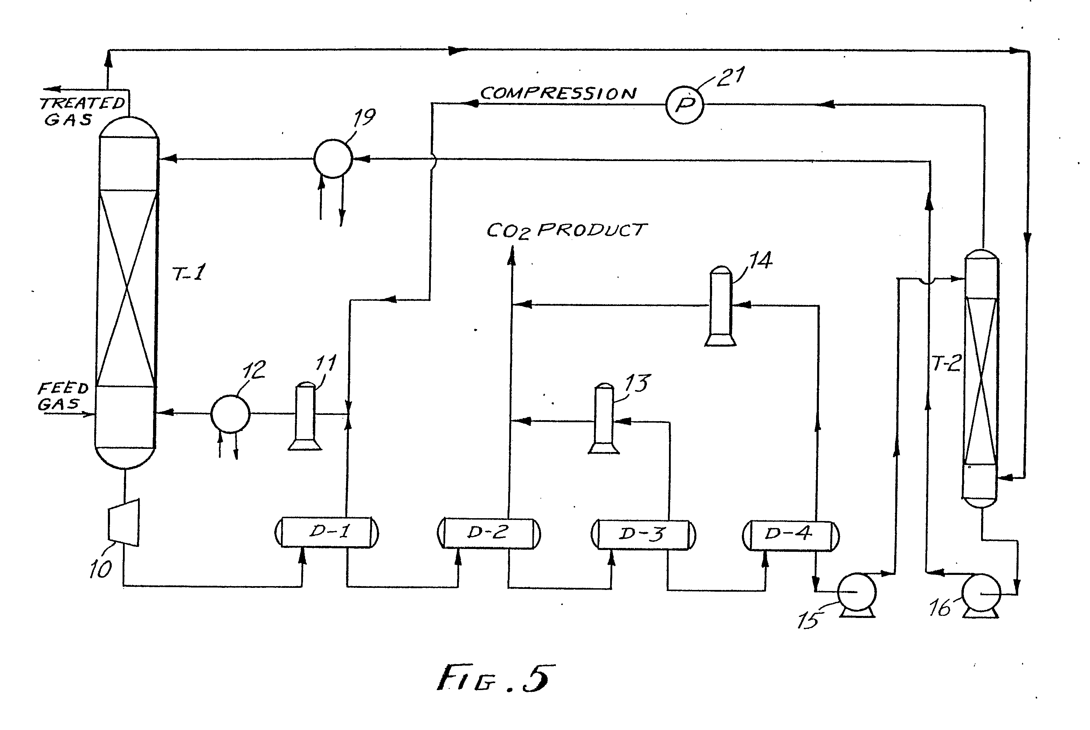

The process of Figure 5 is also similar to that of Figure 1, but with treated synthesis gas employed as stripping gas for stripper T-2, instead of air. The gas and carbon dioxide from T-2 is returned to absorber T-1. The stripping is conducted at subatmospheric pressure, and compressor 21 pumps the gas to high pressure for introduction into T-1. Thus no carbon dioxide is lost, the product from drums D-2 and D-3, and D-4 being the total $CO_2$ removed and recovered from the system.

This scheme is like that of German Patent DE3401 773 to Linde AG, but is of improved efficiency due to the use of very low pressure in column T-2, requiring much less stripping gas requirement. This results into a much lower burden on compressor 21. The process is very energy efficient.

Various modifications including use of other solvents may be made in the processes described above. Operation of the $CO_2$ removal may proceed as in Figures 1, 2, or 3, except that the spent air containing $CO_2$ from the final solvent regeneration step may be treated in an absorption column containing an amine type solvent for complete removal of the $CO_2$. The solvent is then regenerated by heat in a stripper. The stripped $CO_2$ is then mixed with product $CO_2$ from the downstream flash tanks, producing essentially 100% $CO_2$ recovery.

## Claims

1. A process for removing carbon dioxide from a gas in an absorption tower by means of a liquid solvent, wherein the resulting liquid is regenerated by means of a stripping gas for recycle to the absorption tower, characterized in that prior to final regeneration by means of the stripping gas, the solvent is subjected to reduced pressure of about 1 to about 2 psia (0.1 to 0.2 Bar) to provide a solvent stream to the regeneration step having more than 95% of its sorbed carbon dioxide removed.

2. A process according to claim 1, characterized by the fact that the regeneration step is carried out by concurrently mixing a gas with the solvent and separating the gas and carbon dioxide from the solvent in a flash drum.

3. A process as in claims 1 or 2 characterized by the fact that the quantity of stripping gas is minimized such that it can be mixed with the carbon dioxide product and still meet maximum carbon dioxide product specifications.

4. A process according to claim 3, characterized by the fact that the removed carbon dioxide is to be used for feed to a reactor for making urea from ammonia and carbon dioxide.

5. A process according to any one of claims 1-4, characterized by the fact that treated synthesis gas is produced and the solvent is regenerated in a countercurrent flow tower in which the stripping gas is air, the overhead gas of the tower being compressed and fed to the secondary reformer of a synthesis gas process.

6. A process according to any of claims 1-4, characterized by the fact that the solvent is regenerated in a countercurrent flow tower in which the stripping gas is a slipstream of the treated gas and the overhead from the tower is recycled to the bottom of the absorption tower.

7. A process according to any one of claims 1-4, characterized by the fact that the spent air from the regeneration tower is contacted with a chemical liquid sorbent, the sorbent being regenerated in a stripper and the produced carbon dioxide being collected.

FIG.1

AIR

T-2

DEHYDRATION

$H_2O$

D-4

D-3

D-2

D-1

T-1

10

11

12

13

14

15

16

17

18

19

LEAN SOLVENT

T-1

VENT

AIR

FIG. 2

0 270 040

OPTIONAL CO2 PRODUCT

CO2 + MINIMUM AIR

CO2 PRODUCT TO UREA PLANT OR OTHER FACILITIES

OPTIONAL CO2 PRODUCT

T-1

T-2

AIR

D-1    D-2    D-3    D-4

FIG. 3

0 270 040

FIG. 4

FIG.5